# FASCICULE DE BREVET EUROPEEN

(11) **EP 4 616 526 B1**
(45) Date de publication et mention de la délivrance du brevet: **30.09.2026**
(21) Numéro de dépôt: 23790365.3
(22) Date de dépôt: 20.10.2023
(51) Int. Cl.: H02P 23/20, B60L 15/10, B60L 15/20, B60W 20/00

(54) **DISPOSITIF DE CONTRÔLE POUR MACHINE ÉLECTRIQUE, PROCÉDÉ, MACHINE ÉLECTRIQUE ET VÉHICULE AUTOMOBILE ASSOCIÉS**
STEUERVORRICHTUNG FÜR EINE ELEKTRISCHE MASCHINE UND ZUGEHÖRIGES VERFAHREN, ELEKTRISCHE MASCHINE UND KRAFTFAHRZEUG
CONTROL DEVICE FOR AN ELECTRIC MACHINE, AND ASSOCIATED METHOD, ELECTRIC MACHINE AND MOTOR VEHICLE

(30) Priorité: 10.11.2022 FR 2211755
(43) Date de publication de la demande: 17.09.2025
(73) Titulaire: Ampere SAS, 92100 Boulogne-Billancourt (FR)
(72) Inventeur: ASSAAD, Bassel, 78084 Guyancourt Cedex (FR)
(74) Mandataire: Renault Group
(86) Numéro de dépôt international: PCT/EP2023/079382
(87) Numéro de publication internationale: WO 2024/099743

(56) Documents cités:
- FR-A1- 2 979 313
- US-A1- 2013 197 731
- US-B2- 6 755 489

## Description

La présente invention concerne le contrôle de machines électriques tournantes.

La présente invention concerne plus particulièrement un dispositif de contrôle pour machine électrique de propulsion d'un véhicule automobile à propulsion électrique ou hybride, un véhicule automobile électrique ou hybride comportant un tel dispositif et un procédé mettant en œuvre un tel dispositif,
Un véhicule automobile à propulsion électrique ou hybride est équipé d'une machine électrique tournante de propulsion.

La machine électrique génère un couple de propulsion du véhicule automobile à partir d'un rotor mis en rotation dans un stator par un champ magnétique généré par des bobines statoriques formant des phases de la machine électrique et parcourues par un courant.

Généralement, la machine électrique est du type multiphasé, par exemple triphasé.

Lors de la propulsion du véhicule automobile, chaque phase de la machine électrique est alimentée par un courant statorique de même valeur de sorte que les phases sont équilibrées.

Comme le courant parcourant chacune des phases est identique, l'échauffement thermique généré par le courant parcourant chacune des phases est identique de sorte qu'une seule sonde de température est nécessaire pour mesurer la température des bobines des phases.

Cependant, lorsque le conducteur du véhicule automobile régule le couple délivré par la machine électrique tournante par l'intermédiaire d'une pédale d'accélération pour immobiliser le véhicule automobile dans une pente, le courant statorique peut être injecté dans une seule phase ou dans plusieurs phases de sorte que chaque phase est parcourue par un courant de valeur différente et de sorte que l'échauffement thermique généré par le passage d'un courant dans chaque phase est différent.

Le maintien en pente du véhicule nécessite un courant statorique de valeur élevée engendrant échauffement important.

La chaleur produite par le passage du courant statorique de valeur élevée n'est pas dissipée suffisamment rapidement de sorte que de fortes sollicitations thermiques apparaissent pouvant conduire à une surchauffe d'une phase.

La surchauffe d'une phase peut engendrer la destruction des isolants des bobines statoriques et une surchauffe de la machine électrique.

Il est connu d'implémenter deux sondes de température disposées chacune entre deux phases consécutives afin de détecter la surchauffe d'une phase et empêcher la destruction des isolants des bobines statoriques et une surchauffe de la machine électrique.

Cependant, l'implantation de deux sondes de température dans la machine électrique nécessite d'aménager un espace pour loger chaque sonde de température dans la machine électrique et nécessite de prévoir des câblages pour câbler les sondes.

Il est donc proposé de pallier tout ou partie des inconvénients liés à l'utilisation de sondes de température dans une machine électrique.

De plus, le document US 2013/197731 A1 décrit un procédé de contrôle d'un véhicule électrique comprenant la détermination du fait que le véhicule est arrêté sur une pente en mode non-stationné sans demande d'accélération ou de freinage.

Au vu de ce qui précède, l'invention a pour objet un procédé de contrôle d'une machine électrique de propulsion pour véhicule automobile à propulsion électrique ou hybride.

Le procédé comprend :
- a) une détection d'une immobilisation du véhicule automobile dans une pente,
- b) une détermination d'une durée de référence à partir d'une température d'un liquide de refroidissement de la machine électrique et d'un couple appliqué sur un arbre rotorique de la machine électrique tant que le véhicule automobile est immobilisé en pente,
- c) un déclenchement d'un compteur temporel lors de la détection de l'immobilisation du véhicule automobile dans la pente,
- d) une détermination d'un couple de commande de la machine électrique à partir d'un couple de consigne et d'une comparaison entre la durée de référence et la durée écoulée depuis le déclenchement du compteur temporel tant que le véhicule automobile est immobilisé en pente, et
- e) une commande de la machine électrique à partir du couple de commande.

De préférence, le couple de commande de la machine électrique est égal au couple de consigne lorsque le véhicule automobile n'est pas immobilisé en pente ou tant que la durée écoulée depuis le déclenchement du compteur temporel est inférieure à la durée de référence.

Avantageusement, une détection de l'immobilisation du véhicule automobile en pente comprend une comparaison du couple appliqué sur l'arbre rotorique de la machine électrique à un premier seuil prédéterminé et la comparaison de la vitesse du véhicule automobile à un deuxième seuil prédéterminé, le véhicule automobile étant immobilisé dans une pente lorsque le couple est supérieur au premier seuil prédéterminé et la vitesse est inférieure au deuxième seuil prédéterminé.

De préférence, l'étape a) comporte en outre l'initialisation d'une variable représentative du nombre de répétition des étapes b) à d), la variable étant initialisée à une valeur d'initialisation prédéterminée, et une détermination d'un couple de commande de la machine électrique comprend lorsque la durée écoulée depuis le déclenchement du compteur temporel est supérieure ou égale à la durée de référence :
- une comparaison du couple de commande à un couple de détection prédéterminé,
- une détermination d'un premier couple intermédiaire égal au couple de détection prédéterminé lorsque le couple de commande est inférieur au couple de détection prédéterminé ou égal au couple de commande diminué d'un premier couple de correction lorsque le couple de commande est supérieur au couple de détection prédéterminé,
- une première actualisation du couple de commande de sorte que le couple de commande soit égal au premier couple intermédiaire,
- une comparaison de la vitesse du véhicule automobile au deuxième seuil prédéterminé lorsque la machine électrique est commandée à partir du couple de commande égal au premier couple intermédiaire, et
si la vitesse du véhicule automobile est supérieure au deuxième seuil prédéterminé le procédé comprend en outre :
- une détermination d'un deuxième couple intermédiaire si la vitesse du véhicule automobile est supérieure au deuxième seuil prédéterminé égal au couple de commande augmenté d'un deuxième couple de correction,
- une deuxième actualisation du couple de commande de sorte que le couple de commande soit égal au deuxième couple intermédiaire,
- si la variable est égale à la valeur d'initialisation, une détermination d'un nombre de répétitions des étapes b) à e) à partir de la température du liquide de refroidissement et de la durée écoulée depuis le déclenchement du compteur temporel,
- une comparaison de la valeur de la variable au nombre de répétitions, et
- si la valeur de la variable est inférieure au nombre de répétitions, une incrémentation de la valeur de la variable et une répétition des étapes b) à e).

Avantageusement, si la valeur de la variable est supérieure au nombre de répétitions, le procédé comprend en outre l'activation de freins de parking du véhicule automobile.

De préférence, si la vitesse du véhicule automobile est inférieure au deuxième seuil prédéterminé et le couple appliqué sur l'arbre rotorique de la machine électrique est supérieur au premier seuil prédéterminé, le couple de commande est inchangé.

L'invention a encore pour objet un dispositif de contrôle pour machine électrique de propulsion d'un véhicule automobile à propulsion électrique ou hybride.

Le dispositif comprend :
- des moyens de détection configurés pour détecter une immobilisation du véhicule automobile dans une pente,
- des premiers moyens de détermination configurés pour déterminer une durée de référence à partir d'une température d'un liquide de refroidissement de la machine électrique et d'un couple appliqué sur un arbre rotorique de la machine électrique tant que le véhicule automobile est immobilisé en pente,
- un compteur temporel, les moyens de détection étant en outre configurés pour déclencher le compteur temporel lors de la détection de l'immobilisation du véhicule automobile dans la pente,
- des deuxièmes moyens de détermination configurés pour déterminer un couple de commande de la machine électrique à partir d'un couple de consigne et d'une comparaison entre la durée de référence et la durée écoulée depuis le déclenchement du compteur temporel tant que le véhicule automobile est immobilisé en pente, et
- des moyens de commande configurés pour commander la machine électrique à partir du couple de commande.

Avantageusement, les premiers moyens de détermination comprennent une table prédéterminée reliant au moins une durée de référence à une valeur de la température du liquide de refroidissement et à une valeur du couple appliqué sur l'arbre rotorique de la machine électrique.

L'invention a encore pour objet un véhicule automobile à propulsion hybride ou électrique comprenant une machine électrique de propulsion et un dispositif de contrôle tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un exemple d'un véhicule automobile selon l'invention ;
[Fig 2] illustre un exemple de mise en œuvre d'un dispositif de contrôle selon l'invention ; et
[Fig 3] illustre un exemple de graphe reliant un nombre de répétitions à des températures et à des durées selon l'invention.

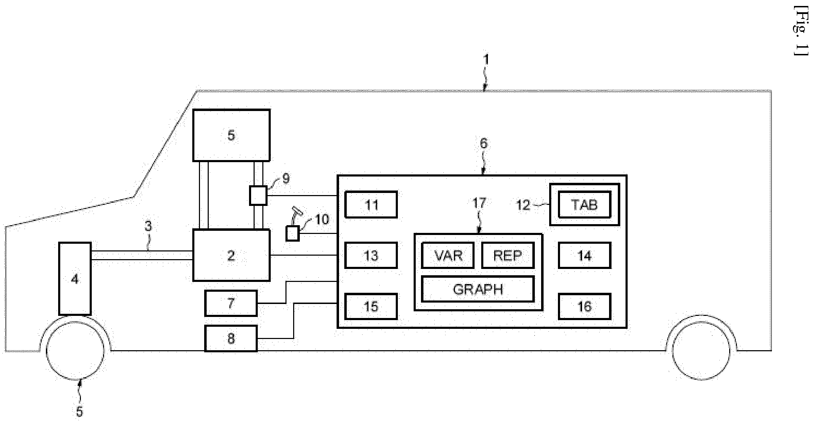

La figure 1 illustre un véhicule automobile 1 électrique comportant une machine électrique 2 de propulsion comportant un arbre rotorique 3, une boîte de transmission 4 reliée aux roues 5 du véhicule automobile 1 et entraînée par la machine électrique 2, et un système de refroidissement 5 de la machine électrique 2.

En variante, le véhicule automobile 1 est un véhicule automobile hybride comportant la machine électrique 2.

Le système de refroidissement 5 injecte un fluide de refroidissement dans la machine électrique 2 et collecte le fluide de refroidissement réchauffé par des calories générées par la machine électrique 2 pour refroidir la machine électrique 2.

Le fluide comporte par exemple de l'huile.

Le véhicule automobile 1 comporte en outre un dispositif de contrôle 6 de la machine électrique 2, un dispositif d'estimation de couple 7, un capteur de vitesse 8 mesurant la vitesse du véhicule automobile 1, un capteur de température 9 mesurant la température du fluide de refroidissement, et une pédale d'accélération 10 délivrant un couple de consigne de la machine électrique 2.

Le dispositif d'estimation de couple 7 estime le couple appliqué sur l'arbre rotorique 3 à partir de courants injectés dans la machine électrique 2.

Le dispositif d'estimation de couple 7, le capteur de vitesse 8, le capteur de température 9, et la pédale d'accélération 10 sont reliés au dispositif de contrôle 6.

Le dispositif de contrôle 6 délivre un signal de commande à la machine électrique 2 représentatif d'un couple de commande, et la pédale d'accélération 10 délivre un signal de consigne au dispositif de contrôle 6 représentatif d'un couple de consigne.

Le dispositif de contrôle 6 comprend des moyens de détection 11, des premiers moyens de détermination 12, un compteur temporel 13, des deuxièmes moyens de détermination 14, et des moyens de commande 15.

Le dispositif de contrôle 6 comprend en outre des moyens de mise en œuvre des moyens de détection 11, des premiers moyens de détermination 12, du compteur temporel 13, des deuxièmes moyens de détermination 14, et des moyens de commande 15.

Les moyens de mise en œuvre comprennent par exemple une unité de traitement 16 mettant en œuvre les moyens de détection 11, les premiers moyens de détermination 12, le compteur temporel 13, les deuxièmes moyens de détermination 14, et les moyens de commande 15.

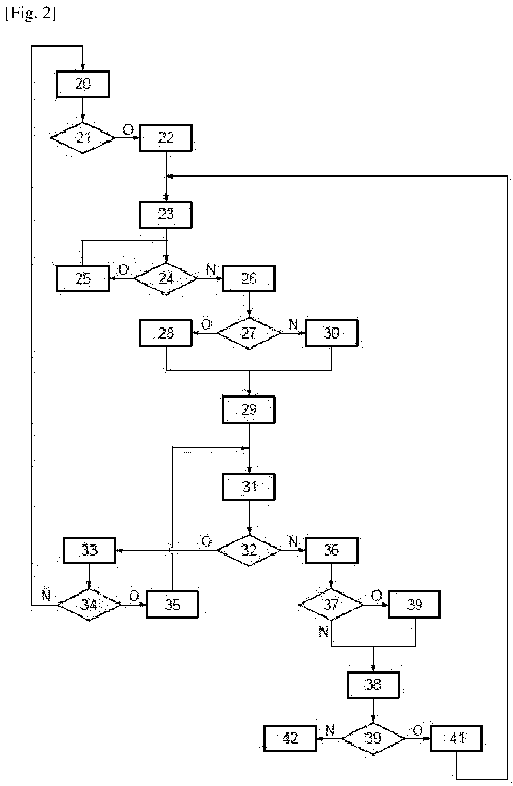

On se réfère à la figure 2 qui illustre un exemple de mise en œuvre du dispositif de contrôle 6.

Le couple de commande de la machine électrique 2 est déterminé par les deuxièmes moyens de détermination 14 à partir du couple de consigne, et d'une comparaison entre une durée de référence et la durée écoulée depuis le déclenchement du compteur temporel tant que le véhicule automobile 1 est immobilisé en pente comme cela est expliqué dans ce qui suit.

On suppose que le signal de commande délivré par les moyens de commande 15 est identique au signal de consigne.

Durant une étape 20, les moyens de détection 11 détectent si le véhicule automobile 1 est immobilisé dans une pente.

Les moyens de détection 11 comparent le couple appliqué sur l'arbre rotorique 3 de la machine électrique 2 délivré par le dispositif d'estimation de couple 7 à un premier seuil prédéterminé, et comparent la vitesse du véhicule automobile 1 délivrée par le capteur de vitesse 8 à un deuxième seuil prédéterminé.

Le premier seuil prédéterminé est par exemple égal à 150 Nm et le deuxième seuil prédéterminé est par exemple égal à 30 tours par minute.

Les valeurs des premier et deuxième seuils sont dépendantes du type du véhicule 1.

Si le couple appliqué sur l'arbre rotorique 3 est supérieur au premier seuil prédéterminé et la vitesse du véhicule automobile 1 est inférieure au deuxième seuil prédéterminé, le véhicule automobile 1 est considéré comme étant immobilisé dans la pente (étape 21), et le procédé se poursuit à l'étape 22.

Dans le cas contraire, le véhicule automobile 1 n'est pas considéré comme étant immobilisé dans la pente et les moyens de commande 15 délivrent le signal de commande identique au signal de consigne.

Durant l'étape 22, une variable VAR stockée dans une mémoire 17 du dispositif 6 est initialisée à une valeur d'initialisation prédéterminée par l'unité de traitement 16.

La valeur de la variable VAR est par exemple initialisée à zéro.

En outre, les moyens de détection 11 déclenchent le compteur temporel 13.

Durant une 23, les premiers moyens de détermination 12 déterminent une durée de référence à partir de la température du liquide de refroidissement relevée par le capteur de température 9 et à partir du couple appliqué sur l'arbre rotorique 3 délivré par le dispositif d'estimation de couple 7.

Les premiers moyens de détermination 12 comprennent une table TAB prédéterminée reliant des durées de référence à des valeurs de température du liquide de refroidissement et à des valeurs de couple appliqué sur l'arbre rotorique de la machine électrique 2.

La table TAB est par exemple déterminée empiriquement à partir d'essais.

Tant que le compteur temporel 13 n'a pas atteint la durée de référence (étape 24), les moyens de commande 15 délivrent le signal de commande identique au signal de consigne (étape 25).

Lorsque la durée écoulée depuis le déclenchement du compteur temporel 13 est supérieure ou égale à la durée de référence (étape 24), les deuxièmes moyens de détermination 14 comparent la valeur du couple de commande à la valeur d'un couple de détection prédéterminé (étape 26) et déterminent un premier couple intermédiaire.

Si la valeur du couple de commande est inférieure à la valeur du couple de détection prédéterminé (étape 27), durant une étape 28, les deuxièmes moyens de détermination 14 actualisent la valeur du premier couple intermédiaire de sorte qu'elle soit égale à la valeur du couple de détection, puis le procédé se poursuit à une étape 29.

Si la valeur du couple de commande est supérieure à la valeur du couple de détection prédéterminé (étape 27), durant une étape 30, les deuxièmes moyens de détermination 14 déterminent la valeur du premier couple intermédiaire égale à la valeur du couple de commande diminuée de la valeur d'un premier couple de correction.

Le couple de correction est par exemple égal à un coefficient de déchéance de couple exprimé en newton par seconde multiplié par une durée dépendant du type du véhicule 1 et par exemple égal à -50 Nm/s.

Le coefficient de déchéance est déterminé empiriquement en effectuant différents essais du véhicule automobile 1 sur des pentes d'inclinaison différentes et des masses du véhicule automobile 1 de différentes valeurs.

Le procédé se poursuit à une étape 29.

Durant l'étape 29, les deuxièmes moyens de détermination 14 actualisent la valeur du couple de commande de sorte qu'elle soit égale à la valeur du premier couple intermédiaire, et les moyens de commande 15 délivrent le signal de commande représentatif du couple de commande actualisé.

Durant une étape 31, les deuxièmes moyens de détermination 14 comparent la vitesse du véhicule automobile 1 délivrée par le capteur de vitesse 8 au deuxième seuil prédéterminé.

Si la vitesse du véhicule automobile 1 est inférieure au deuxième seuil prédéterminé (étape 32), durant une étape 33, les deuxièmes moyens de détermination 14 comparent la valeur du couple appliqué sur l'arbre rotorique 3 délivrée par le dispositif d'estimation de couple 7 au premier seuil prédéterminé.

Si la valeur du couple appliqué sur l'arbre rotorique 3 est inférieure au premier seuil prédéterminé (étape 34), le véhicule automobile 1 est considéré comme n'étant plus immobilisé dans la pente.

Le procédé se poursuit à l'étape 20.

Si la valeur du couple appliqué sur l'arbre rotorique 3 est supérieure au premier seuil prédéterminé (étape 34), durant l'étape 35, le couple de commande est maintenu de sorte que le signal de commande délivré par les moyens de commande 15 est inchangé, et le procédé se poursuit à l'étape 31.

Si la vitesse du véhicule automobile 1 est supérieure au deuxième seuil prédéterminé (étape 32), le véhicule automobile 1 se déplace.

La valeur du couple de commande n'est pas suffisamment élevée pour immobiliser le véhicule automobile 1 dans la pente, et le procédé se poursuit à une étape 36.

Durant l'étape 36, les deuxièmes moyens de détermination 14 déterminent la valeur d'un deuxième couple intermédiaire égale à la valeur du couple de commande augmentée d'un deuxième couple de correction, et actualisent la valeur du couple de commande de sorte qu'elle soit égale à la valeur du deuxième couple intermédiaire.

Les moyens de commande 15 délivrent le signal de commande représentatif du couple de commande actualisé.

Si la valeur de la variable est différente de la valeur d'initialisation (étape 37), le procédé se poursuit à l'étape 38.

Si la valeur de la variable est égale à la valeur d'initialisation (étape 37), durant une étape 39, les deuxièmes moyens de détermination 14 déterminent la valeur d'une variable REP à partir de la température du liquide de refroidissement délivrée par le capteur de température 9 et de la durée Tc écoulée depuis le déclenchement du compteur temporel 13.

Les deuxièmes moyens de détermination 14 déterminent par exemple la valeur de la variable REP à partir d'un graphe GRAPH comportant des courbes reliant la valeur de la variable REP et la durée Tc, chaque courbe correspondant à une température du liquide de refroidissement différente.

La variable REP et le graphe GRAPH sont par exemple stockés dans la mémoire 17.

Puis le procédé se poursuit à l'étape 38.

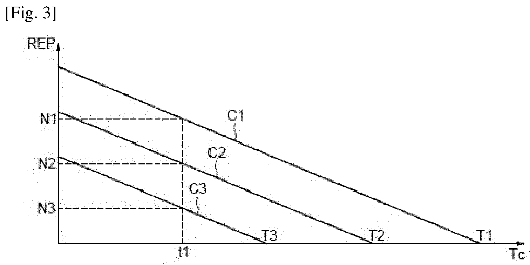

La figure 3 illustre un exemple du graphe GRAPH comportant trois courbes C1, C2, C3 reliant la valeur de la variable REP et la durée Tc.

Une première courbe C1 correspond à une température T1 du liquide de refroidissement, une deuxième courbe C2 correspond à une température T2 du liquide de refroidissement, et la troisième courbe C3 correspond à une température T3 du liquide de refroidissement, les températures T1, T2, T3 étant différentes l'une des autres.

Par exemple, pour une durée Tc égale à une valeur t1, la valeur de la variable REP est égale à N1 si la température du liquide de refroidissement est égale à T1, N2 si la température du liquide de refroidissement est égale à T2, et à N3 si la température du liquide de refroidissement est égale à T3, les valeurs N1, N2, N3 étant différentes l'une des autres.

Les courbes C1, C2, C3 sont déterminées par exemple à partir de simulations numériques et d'essais comprennent plusieurs étapes d'immobilisation du véhicule automobile 1 dans la pente.

On se réfère à nouveau à la figure 2.

Durant l'étape 38, la valeur de la variable VAR est comparée à la valeur de la variable REP.

Si la valeur de la variable VAR est inférieure à la valeur de la variable REP (étape 40), durant une étape 41, la valeur de la variable VAR est incrémentée et le procédé se poursuit à l'étape 23.

Si la valeur de la variable VAR est supérieure à la valeur de la variable REP (étape 40), durant une étape 42, le dispositif de commande 6 délivre un deuxième signal à des moyens de commande des freins de parking du véhicule automobile 1 (non représentés) de sorte que les freins de parking du véhicule automobile 1 soient activés.

En outre, une interface homme machine du véhicule automobile 1 (non représentée) averti le conducteur du véhicule automobile 1 de l'activation des freins de parking.

L'interface homme machine comporte par exemple un voyant.

La variable REP déterminée à l'étape 39 est représentative du nombre de répétitions maximales des étapes 23 à 41 de manière à empêcher une surchauffe de la machine électrique 2.

Le dispositif de commande 6 permet de contrôler la température de la machine électrique 2 de manière à éviter une surchauffe de la machine électrique 2 lorsque le véhicule automobile 1 est immobilisé dans une pente sans l'ajout de sonde de température dans la machine électrique 2.

En variante, la valeur du couple appliqué sur l'arbre rotorique 3 peut être déterminée par autre moyen que le dispositif d'estimation de couple, par exemple par un modèle de la machine électrique 2.

En variante, la valeur de la vitesse du véhicule automobile 1 peut être déterminée par autre moyen que le capteur de vitesse 8, par exemple à partir d'une information circulant sur un bus du véhicule automobile 1.

En variante, la valeur de la température du fluide de refroidissement peut être déterminée par autre moyen que le capteur de température 9, par exemple à partir d'un modèle de la machine électrique 2.

En variante, la valeur du couple de consigne peut être déterminée par autre moyen que la pédale d'accélération 10, par exemple à partir d'une information circulant sur un bus du véhicule automobile 1.

## Revendications

1. Procédé de contrôle d'une machine électrique (2) de propulsion pour véhicule automobile (1) à propulsion électrique ou hybride, **caractérisé en ce que** le procédé comprend :
- a) une détection d'une immobilisation du véhicule automobile (1) dans une pente,
- b) une détermination d'une durée de référence à partir d'une température d'un liquide de refroidissement de la machine électrique (2) et d'un couple appliqué sur un arbre rotorique (3) de la machine électrique tant que le véhicule automobile est immobilisé en pente,
- c) un déclenchement d'un compteur temporel (13) lors de la détection de l'immobilisation du véhicule automobile dans la pente,
- d) une détermination d'un couple de commande de la machine électrique à partir d'un couple de consigne et d'une comparaison entre la durée de référence et la durée écoulée depuis le déclenchement du compteur temporel tant que le véhicule automobile est immobilisé en pente, et
- e) une commande de la machine électrique (2) à partir du couple de commande.

2. Procédé selon la revendication 1, dans lequel le couple de commande de la machine électrique (2) est égal au couple de consigne lorsque le véhicule automobile n'est pas immobilisé en pente ou tant que la durée écoulée depuis le déclenchement du compteur temporel est inférieure à la durée de référence.

3. Procédé selon l'une des revendications 1 ou 2, dans lequel une détection de l'immobilisation du véhicule automobile (1) en pente comprend une comparaison du couple appliqué sur l'arbre rotorique (3) de la machine électrique (2) à un premier seuil prédéterminé et la comparaison de la vitesse du véhicule automobile (1) à un deuxième seuil prédéterminé, le véhicule automobile étant immobilisé dans une pente lorsque le couple est supérieur au premier seuil prédéterminé et la vitesse est inférieure au deuxième seuil prédéterminé.

4. Procédé selon l'une quelconque des revendications 1 à 3, dans lequel l'étape a) comporte en outre l'initialisation d'une variable représentative du nombre de répétition des étapes b) à d), la variable étant initialisée à une valeur d'initialisation prédéterminée, et dans lequel une détermination d'un couple de commande de la machine électrique (2) lorsque la durée écoulée depuis le déclenchement du compteur temporel est supérieure ou égale à la durée de référence comprend :
- une comparaison du couple de commande à un couple de détection prédéterminé,
- une détermination d'un premier couple intermédiaire égal au couple de détection prédéterminé lorsque le couple de commande est inférieur au couple de détection prédéterminé ou égal au couple de commande diminué d'un premier couple de correction lorsque le couple de commande est supérieur au couple de détection prédéterminé,
- une première actualisation du couple de commande de sorte que le couple de commande soit égal au premier couple intermédiaire,
- une comparaison de la vitesse du véhicule automobile au deuxième seuil prédéterminé lorsque la machine électrique (2) est commandée à partir du couple de commande égal au premier couple intermédiaire, et
si la vitesse du véhicule automobile (1) est supérieure au deuxième seuil prédéterminé le procédé comprend en outre :
- une détermination d'un deuxième couple intermédiaire si la vitesse du véhicule automobile est supérieure au deuxième seuil prédéterminé égal au couple de commande augmenté d'un deuxième couple de correction,
- une deuxième actualisation du couple de commande de sorte que le couple de commande soit égal au deuxième couple intermédiaire,
- si la variable est égale à la valeur d'initialisation, une détermination d'un nombre de répétitions des étapes b) à e) à partir de la température du liquide de refroidissement et de la durée écoulée depuis le déclenchement du compteur temporel,
- une comparaison de la valeur de la variable au nombre de répétitions, et
- si la valeur de la variable est inférieure au nombre de répétitions, une incrémentation de la valeur de la variable et une répétition des étapes b) à e).

5. Procédé selon la revendication 4, dans lequel si la valeur de la variable est supérieure au nombre de répétitions, le procédé comprend en outre l'activation de freins de parking du véhicule automobile (1).

6. Procédé selon l'une des revendications 4 ou 5, dans lequel si la vitesse du véhicule automobile (1) est inférieure au deuxième seuil prédéterminé et le couple appliqué sur l'arbre rotorique de la machine électrique (2) est supérieur au premier seuil prédéterminé, le couple de commande est inchangé.

7. Dispositif de contrôle (6) pour machine électrique (2) de propulsion d'un véhicule automobile (1) à propulsion électrique ou hybride, **caractérisé en ce que** le dispositif comprend :
- des moyens de détection (11) configurés pour détecter une immobilisation du véhicule automobile (1) dans une pente,
- des premiers moyens (12) de détermination configurés pour déterminer une durée de référence à partir d'une température d'un liquide de refroidissement de la machine électrique (2) et d'un couple appliqué sur un arbre rotorique (3) de la machine électrique (2) tant que le véhicule automobile est immobilisé en pente,
- un compteur temporel (13), les moyens de détection (11) étant en outre configurés pour déclencher le compteur temporel lors de la détection de l'immobilisation du véhicule automobile dans la pente,
- des deuxièmes moyens (14) de détermination configurés pour déterminer un couple de commande de la machine électrique (2) à partir d'un couple de consigne et d'une comparaison entre la durée de référence et la durée écoulée depuis le déclenchement du compteur temporel (13) tant que le véhicule automobile est immobilisé en pente, et
- des moyens de commande (15) configurés pour commander la machine électrique (2) à partir du couple de commande.

8. Dispositif de contrôle selon la revendication 7, dans lequel les premiers moyens (11) de détermination comprennent une table (TAB) prédéterminée reliant au moins une durée de référence à une valeur de la température du liquide de refroidissement et à une valeur du couple appliqué sur l'arbre rotorique de la machine électrique.

9. Véhicule automobile (1) à propulsion électrique ou hybride comprenant une machine électrique (2) de propulsion et un dispositif de contrôle (6) selon l'une des revendications 7 et 8.

## Patentansprüche

1. Verfahren zur Steuerung einer elektrischen Antriebsmaschine (2) für ein Kraftfahrzeug (1) mit Elektro- oder Hybridantrieb, **dadurch gekennzeichnet, dass** das Verfahren umfasst:
- a) ein Detektieren eines Stillstands des Kraftfahrzeugs (1) an einem Hang,
- b) ein Bestimmen einer Referenzdauer ausgehend von einer Temperatur einer Kühlflüssigkeit der elektrischen Maschine (2) und von einem Drehmoment, das auf eine Rotorwelle (3) der elektrischen Maschine ausgeübt wird, solange das Kraftfahrzeug an einem Hang stillsteht,
- c) ein Auslösen eines Zeitzählers (13) beim Detektieren des Stillstands des Kraftfahrzeugs an dem Hang,
- d) ein Bestimmen eines Steuerdrehmoments der elektrischen Maschine ausgehend von einem Solldrehmoment und von einem Vergleich zwischen der Referenzdauer und der seit dem Auslösen des Zeitzählers verstrichenen Dauer, solange das Kraftfahrzeug an dem Hang stillsteht, und
- e) ein Steuern der elektrischen Maschine (2) ausgehend von dem Steuerdrehmoment.

2. Verfahren nach Anspruch 1, wobei das Steuerdrehmoment der elektrischen Maschine (2) gleich dem Sollmoment ist, wenn das Kraftfahrzeug nicht an einem Hang stillsteht oder solange die seit dem Auslösen des Zeitzählers verstrichene Dauer kürzer als die Referenzdauer ist.

3. Verfahren nach einem der Ansprüche 1 oder 2, wobei ein Detektieren des Stillstands des Kraftfahrzeugs (1) an einem Hang ein Vergleichen des auf die Rotorwelle (3) der elektrischen Maschine (2) ausgeübten Drehmoments mit einem ersten vorbestimmten Schwellenwert und das Vergleichen der Geschwindigkeit des Kraftfahrzeugs (1) mit einem zweiten vorbestimmten Schwellenwert umfasst, wobei das Kraftfahrzeug an einem Hang stillsteht, wenn das Drehmoment größer als der erste vorbestimmte Schwellenwert ist und die Geschwindigkeit geringer als der zweite vorbestimmte Schwellenwert ist.

4. Verfahren nach einem der Ansprüche 1 bis 3, wobei der Schritt a) ferner die Initialisierung einer für die Anzahl von Wiederholungen der Schritte b) bis d) repräsentativen Variablen umfasst, wobei die Variable auf einen vorbestimmten Initialisierungswert initialisiert wird, und wobei eine Bestimmung eines Steuerdrehmoments der elektrischen Maschine (2), wenn die seit dem Auslösen des Zeitzählers verstrichene Dauer größer oder gleich der Referenzdauer ist, umfasst:
- ein Vergleichen des Steuerdrehmoments mit einem vorbestimmten Detektionsdrehmoment,
- ein Bestimmen eines ersten Zwischendrehmoments, das gleich dem vorbestimmten Detektionsdrehmoment ist, wenn das Steuerdrehmoment kleiner als das vorbestimmte Detektionsdrehmoment ist, oder gleich dem um ein erstes Korrekturdrehmoment vermindertes Steuerdrehmoment ist, wenn das Steuerdrehmoment größer als das vorbestimmte Detektionsdrehmoment ist,
- ein erstes Aktualisieren des Steuerdrehmoments, so dass das Steuerdrehmoment gleich dem ersten Zwischendrehmoment ist,
- ein Vergleichen der Geschwindigkeit des Kraftfahrzeugs mit dem zweiten vorbestimmten Schwellenwert, wenn die elektrische Maschine (2) ausgehend von dem Steuerdrehmoment, das gleich dem ersten Zwischendrehmoment ist, gesteuert wird, und
das Verfahren, wenn die Geschwindigkeit des Kraftfahrzeugs (1) höher als der zweite vorbestimmte Schwellenwert ist, ferner umfasst:
- ein Bestimmen eines zweiten Zwischendrehmoments, wenn die Geschwindigkeit des Kraftfahrzeugs höher als der zweite vorbestimmte Schwellenwert ist, der gleich dem um ein zweites Korrekturdrehmoment erhöhtes Steuerdrehmoment ist,
- ein zweites Aktualisieren des Steuerdrehmoments, so dass das Steuerdrehmoment gleich dem zweiten Zwischendrehmoment ist,
- wenn die Variable gleich dem Initialisierungswert ist, ein Bestimmen einer Anzahl von Wiederholungen der Schritte b) bis e) ausgehend von der Temperatur der Kühlflüssigkeit und von der seit dem Auslösen des Zeitzählers verstrichenen Dauer,
- ein Vergleichen des Werts der Variablen mit der Anzahl von Wiederholungen, und
- wenn der Wert der Variablen kleiner als die Anzahl von Wiederholungen ist, ein Inkrementieren des Werts der Variablen und ein Wiederholen der Schritte b) bis e).

5. Verfahren nach Anspruch 4, wobei das Verfahren, wenn der Wert der Variablen größer als die Anzahl von Wiederholungen ist, ferner das Aktivieren von Feststellbremsen des Kraftfahrzeugs (1) umfasst.

6. Verfahren nach einem der Ansprüche 4 oder 5, wobei das Steuerdrehmoment, wenn die Geschwindigkeit des Kraftfahrzeugs (1) geringer als der zweite vorbestimmte Schwellenwert ist und das auf die Rotorwelle der elektrischen Maschine (2) ausgeübte Drehmoment größer als der erste vorbestimmte Schwellenwert ist, unverändert bleibt.

7. Steuervorrichtung (6) für eine elektrische Antriebsmaschine (2) eines Kraftfahrzeugs (1) mit Elektro- oder Hybridantrieb, **dadurch gekennzeichnet, dass** die Vorrichtung umfasst:
- Detektionsmittel (11), die dazu ausgelegt sind, einen Stillstand des Kraftfahrzeugs (1) an einem Hang zu detektieren,
- erste Mittel (12) zur Bestimmung, die dazu ausgelegt sind, eine Referenzdauer ausgehend von einer Temperatur einer Kühlflüssigkeit der elektrischen Maschine (2) und von einem Drehmoment, das auf eine Rotorwelle (3) der elektrischen Maschine (2) ausgeübt wird, zu bestimmen, solange das Kraftfahrzeug an einem Hang stillsteht,
- einen Zeitzähler (13), wobei die Detektionsmittel (11) ferner dazu ausgelegt sind, den Zeitzähler beim Detektieren des Stillstands des Kraftfahrzeugs an dem Hang auszulösen,
- zweite Mittel (14) zur Bestimmung, die dazu ausgelegt sind, ein Steuerdrehmoment der elektrischen Maschine (2) ausgehend von einem Solldrehmoment und von einem Vergleich zwischen der Referenzdauer und der seit dem Auslösen des Zeitzählers (13) verstrichenen Dauer zu bestimmen, solange das Kraftfahrzeug an dem Hang stillsteht, und
- Steuermittel (15), die dazu ausgelegt sind, die elektrische Maschine (2) ausgehend von dem Steuerdrehmoment zu steuern.

8. Steuervorrichtung nach Anspruch 7, wobei die ersten Mittel (11) zur Bestimmung eine vorbestimmte Tabelle (TAB) umfassen, die mindestens eine Referenzdauer mit einem Wert der Temperatur der Kühlflüssigkeit und mit einem Wert des auf die Rotorwelle der elektrischen Maschine ausgeübten Drehmoments verknüpft.

9. Kraftfahrzeug (1) mit Elektro- oder Hybridantrieb, das eine elektrische Antriebsmaschine (2) und eine Steuervorrichtung (6) nach einem der Ansprüche 7 und 8 umfasst.

## Claims

1. Method for controlling an electric propulsion machine (2) for the propulsion of an electric or hybrid motor vehicle (1), **characterized in that** the method comprises:
- a) detecting that the motor vehicle (1) has been immobilized on a slope,
- b) determining a reference duration on the basis of a temperature of a cooling fluid of the electric machine (2) and of a torque applied to a rotor shaft (3) of the electric machine for as long as the motor vehicle is immobilized on a slope,
- c) starting a timer (13) upon detection that the motor vehicle has been immobilized on the slope,
- d) determining a command torque for commanding the electric machine on the basis of a setpoint torque and of a comparison between the reference duration and the time elapsed since the starting of the timer for as long as the motor vehicle is immobilized on a slope, and
- e) commanding the electric machine (2) on the basis of the command torque.

2. Method according to Claim 1, wherein the command torque for commanding the electric machine (2) is equal to the setpoint torque when the motor vehicle is not immobilized on a slope or for as long as the time elapsed since the starting of the timer is less than the reference duration.

3. Method according to one of Claims 1 and 2, wherein detecting that the motor vehicle (1) has been immobilized on a slope comprises comparing the torque applied to the rotor shaft (3) of the electric machine (2) against a first predetermined threshold and comparing the speed of the motor vehicle (1) against a second predetermined threshold, the motor vehicle being immobilized on a slope when the torque is above the first predetermined threshold and the speed is below the second predetermined threshold.

4. Method according to any one of Claims 1 to 3, wherein step a) further comprises initializing a variable representative of the number of repeats of steps b) to d), the variable being set to a predetermined initialization value, and wherein determining a command torque for commanding the electric machine (2) when the time elapsed since the starting of the timer is greater than or equal to the reference duration comprises:
- comparing the command torque against a predetermined detection torque,
- determining a first intermediate torque that is equal to the predetermined detection torque when the command torque is below the predetermined detection torque or is equal to the command torque reduced by a first correction torque when the command torque is above the predetermined detection torque,
- a first updating of the command torque so that the command torque is equal to the first intermediate torque,
- comparing the speed of the motor vehicle against the second predetermined threshold when the electric machine (2) is being commanded on the basis of the command torque equal to the first intermediate torque, and
if the speed of the motor vehicle (1) is above the second predetermined threshold, the method further comprises:
- determining a second intermediate torque if the speed of the motor vehicle is above the second predetermined threshold equal to the command torque increased by a second correction torque,
- a second updating of the command torque so that the command torque is equal to the second intermediate torque,
- if the variable is equal to the initialization value, determining a number of repeats of steps b) to e) on the basis of the temperature of the cooling fluid and of the time elapsed since the starting of the timer,
- comparing the value of the variable against the number of repeats, and
- if the value of the variable is below the number of repeats, incrementing the value of the variable and repeating steps b) to e).

5. Method according to Claim 4, wherein if the value of the variable is above the number of repeats, the method further comprises activating the parking brakes of the motor vehicle (1).

6. Method according to one of Claims 4 and 5, wherein if the speed of the motor vehicle (1) is below the second predetermined threshold and the torque applied to the rotor shaft of the electric machine (2) is above the first predetermined threshold, the command torque remains unchanged.

7. Control device (6) for controlling an electric propulsion machine (2) for the propulsion of an electric or hybrid motor vehicle (1), **characterized in that** the device comprises:
- detection means (11) configured for detecting that the motor vehicle (1) has been immobilized on a slope,
- first determination means (12) configured for determining a reference duration on the basis of a temperature of a cooling fluid of the electric machine (2) and of a torque applied to a rotor shaft (3) of the electric machine (2) for as long as the motor vehicle is immobilized on a slope,
- a timer (13), the detection means (11) being further configured for starting the timer upon detection that the motor vehicle has been immobilized on the slope,
- second determination means (14) configured for determining a command torque for commanding the electric machine (2) on the basis of a setpoint torque and of a comparison between the reference duration and the time elapsed since the starting of the timer (13) for as long as the motor vehicle is immobilized on a slope, and
- command means (15) configured for commanding the electric machine (2) on the basis of the command torque.

8. Control device according to Claim 7, wherein the first determination means (11) comprise a predetermined table (TAB) linking at least a reference duration with a value of the temperature of the cooling fluid and with a value of the torque applied to the rotor shaft of the electric machine.

9. Electric or hybrid motor vehicle (1) comprising an electric propulsion machine (2) and a control device (6) according to one of Claims 7 and 8.
